# EUROPEAN PATENT APPLICATION

(11) **EP 4 606 774 A1**
(43) Date of publication of application: **27.08.2025**
(21) Application number: 23874680.4
(22) Date of filing: 22.09.2023
(51) Int. Cl.: C01G 53/00, H01M 4/505, H01M 4/525

(54) **LITHIUM-METAL COMPLEX OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(30) Priority: 03.10.2022 JP 2022159711
(71) Applicant: Sumitomo Chemical Company, Limited, Tokyo 103-6020 (JP)
(72) Inventor: NAGAO, Daisuke, Niihama-shi, Ehime 792-8521 (JP)
(74) Representative: Vossius & Partner Patentanwälte Rechtsanwälte mbB
(86) International application number: PCT/JP2023/034552
(87) International publication number: WO 2024/075551

(57) **Abstract**

A lithium metal composite oxide contains at least Li and Ni, in which (1) and (2) are satisfied, (1) in a pore size distribution of an adsorption isotherm which is obtained by measuring an adsorption isotherm and a desorption isotherm with a nitrogen gas according to a Barrett-Joyner-Halenda method, a pore volume in a range where a pore size is 2 nm to 10 nm is more than 0.4 × 10⁻³ cm³/g and 1.0 × 10⁻³ cm³/g, (2) A/D₅₀ is 0.9 × 10⁻³ to 3.4 × 10⁻³.

## Description

### TECHNICAL FIELD

The present invention relates to a lithium metal composite oxide, a positive electrode active material for lithium secondary battery, a positive electrode for lithium secondary battery, and a lithium secondary battery.

Priority is claimed on Japanese Patent Application No. 2022-159711, filed on October 3, 2022, the content of which is incorporated herein by reference.

### BACKGROUND ART

A positive electrode for lithium secondary battery, which is provided in a lithium secondary battery, can be manufactured by preparing a paste-like positive electrode mixture containing a positive electrode active material, a conductive material, and a binder, and applying the positive electrode mixture onto a positive electrode current collector. As a method of applying the positive electrode mixture onto the positive electrode current collector, a method of applying the paste-like positive electrode mixture onto the positive electrode current collector by a slit die coating method, a screen coating method, or the like is used.

From the viewpoint of efficiently manufacturing the lithium secondary battery, studies have been conducted to improve coating properties of the positive electrode mixture. Here, the "coating properties" are evaluated based on adhesiveness between a positive electrode mixture layer and a positive electrode current collector layer (whether or not the positive electrode mixture layer is peeled off from the positive electrode current collector layer), whether or not exposure of the positive electrode current collector occurs (whether or not streaking occurs) in a case where the positive electrode mixture is applied onto the positive electrode current collector, and the like.

For example, Patent Document 1 discloses a positive electrode active material having favorable coating properties, in which the particle diameter, the specific surface area, an amount of lithium carbonate, and the average collapse strength of secondary particles are controlled within predetermined ranges.

### Citation List

### Patent Document

Patent Document 1: JP 6587044 B

### SUMMARY OF INVENTION

### Technical Problem

The coating properties of the positive electrode mixture strongly depend on the viscosity of the positive electrode mixture. The viscosity of the positive electrode mixture is likely to change depending on the state of particles of a lithium metal composite oxide constituting the positive electrode active material.

In order to enable efficient work in a case of applying the positive electrode mixture and to keep quality of the lithium secondary battery to be manufactured constant, it is required that the positive electrode mixture has a low initial viscosity during adjustment and is unlikely to change from the initial viscosity during continuous coating.

The present invention has been made in view of the above circumstances, and an object of the present invention is to provide a lithium metal composite oxide from which a positive electrode mixture having low initial viscosity during adjustment and being unlikely to change from the initial viscosity during continuous coating can be obtained, a positive electrode active material for lithium secondary battery, using the lithium metal composite oxide, a positive electrode for lithium secondary battery, and a lithium secondary battery.

### Solution to Problem

The present invention includes the following [1] to [13].
[1] A lithium metal composite oxide containing at least Li and Ni,
   in which the following (1) and the following (2) are satisfied,
      (1) in a pore size distribution of an adsorption isotherm which is obtained by measuring an adsorption isotherm and a desorption isotherm with a nitrogen gas according to a Barrett-Joyner-Halenda method, a pore volume in a range where a pore size is 2 nm or more and 10 nm or less is more than 0.4 × 10⁻³ cm³/g and 1.0 × 10⁻³ cm³/g or less,
      (2) A/D₅₀ is 0.9 × 10⁻³ or more and 3.4 × 10⁻³ or less,
   (A is an average pore size (nm) based on a pore size distribution of a desorption isotherm obtained by measuring an adsorption isotherm and a desorption isotherm with a nitrogen gas according to a Barrett-Joyner-Halenda method, and D₅₀ is a value (µm) of a particle diameter at 50% cumulative from a fine particle side in a cumulative particle size distribution curve obtained by a particle size distribution measurement of the lithium metal composite oxide).
[2] The lithium metal composite oxide according to [1],
   in which the following (3) is satisfied,
   (3) A/D₁₀ is 6.5 × 10⁻³ or less,
   (D₁₀ is a value (µm) of a particle diameter at 10% cumulative from the fine particle side in the cumulative particle size distribution curve).
[3] The lithium metal composite oxide according to [1] or [2],
   in which the following (4) is satisfied,
      (4) A/D₉₀ is 1.9 × 10⁻³ or less,
   (D₉₀ is a value (µm) of a particle diameter at 90% cumulative from the fine particle side in the cumulative particle size distribution curve).
[4] The lithium metal composite oxide according to any one of [1] to [3],
   in which the following (5) is satisfied,
   (5) in the pore size distribution of the adsorption isotherm, the pore volume in a range where the pore size is more than 10 nm and 200 nm or less is 8.0 × 10⁻³ cm³/g or less.
[5] The lithium metal composite oxide according to any one of [1] to [4],
   in which a BET specific surface area is 0.5 m²/g or more and 1.5 m²/g or less.
[6] The lithium metal composite oxide according to any one of [1] to [5],
   in which the A is 10 nm or more and 40 nm or less.
[7] The lithium metal composite oxide according to any one of [1] to [6],
   in which a tap density is 2.5 g/cm³ or more and 3.1 g/cm³ or less.
[8] The lithium metal composite oxide according to any one of [1] to [7],
   in which the D₅₀ is 5 µm or more and 20 µm or less.
[9] The lithium metal composite oxide according to any one of [1] to [8],
   in which the lithium metal composite oxide is represented by the following compositional formula (I),

      Li[Liₓ(Ni_{(1-y-z)}M1_{y}M2_{z})₁₋ₓ]O₂ ... (I)
   (in the compositional formula (I), M1 is one or more elements selected from the group consisting of Co, Mn, and Al, M2 is one or more elements selected from the group consisting of Fe, Cu, Ti, Mg, W, Mo, Nb, Zn, Sn, Zr, Ga, B, Si, S, and P, and the compositional formula (I) satisfies -0.1 ≤ x ≤ 0.2, 0 < y ≤ 0.7, and 0 ≤ z ≤ 0.2).
[10] The lithium metal composite oxide according to [9],
   in which the compositional formula (I) satisfies 0 < y + z ≤ 0.3.
[11] A positive electrode active material for lithium secondary battery, containing:
   the lithium metal composite oxide according to any one of [1] to [10].
[12] A positive electrode for lithium secondary battery, containing:
   the positive electrode active material for lithium secondary battery according to [11].
[13] A lithium secondary battery including:
   the positive electrode for lithium secondary battery according to [12].

### Advantageous Effects of Invention

According to the present invention, it is possible to provide a lithium metal composite oxide from which a positive electrode mixture having low initial viscosity during adjustment and being unlikely to change from the initial viscosity during continuous coating can be obtained, a positive electrode active material for lithium secondary battery, using the lithium metal composite oxide, a positive electrode for lithium secondary battery, and a lithium secondary battery.

### BRIEF DESCRIPTION OF DRAWINGS

[FIG. 1] A schematic configuration view showing an example of a lithium secondary battery.
[FIG. 2] A schematic view showing an entire configuration of an all-solid-state lithium secondary battery.

### DESCRIPTION OF EMBODIMENTS

In the present specification, a metal composite compound will be referred to as "MCC"; a lithium metal composite oxide will be referred to as "LiMO"; a cathode active material for lithium secondary battery will be referred to as "CAM"; and a Barrett-Joyner-Halenda method will be referred to as "BJH method".

"Ni" refers to a nickel atom, not a nickel metal. "Li" and the like also refer to a lithium atom in the same manner.

In a case where a numerical range is described as, for example, "1 to 10 µm", the numerical range means a range from 1 µm to 10 µm, and means a numerical range including 1 µm as a lower limit value and 10 µm as an upper limit value.

A lithium secondary battery refers to a lithium ion secondary battery.

### [Method of measuring pore size and pore volume]

"Pore size" and "pore volume" are determined based on a pore size distribution of an adsorption isotherm and a desorption isotherm obtained by measuring an adsorption isotherm and a desorption isotherm with a nitrogen gas according to the BJH method. The BJH method is a method of performing analysis on the assumption that the pore shape is a cylindrical shape, based on a relational expression (Kelvin equation) between a pore size which causes capillary condensation and a relative pressure of nitrogen. The pore size distribution determined from the desorption isotherm derives from bottleneck type pores. In the present specification, the "pore size" refers to the diameter of pores.

The adsorption isotherm and the desorption isotherm with the nitrogen gas can be measured by, for example, the following gas adsorption method. First, 10 g of the LiMO is subjected to a vacuum degassing treatment at 150°C for 8 hours using a vacuum calcining treatment device. After the vacuum degassing treatment, using a measuring device, a nitrogen adsorption isotherm and a nitrogen desorption isotherm of the LiMO at a liquid nitrogen temperature (77 K) are measured.

As the vacuum calcining treatment device, for example, BELSORP-vacII manufactured by MicrotracBEL Corp. can be used.

As the above-described measuring device, for example, BELSORP-mini manufactured by MicrotracBel Corp. can be used.

An amount of nitrogen adsorbed per unit weight of the LiMO in the adsorption isotherm is calculated so as to be expressed in a volume of gaseous nitrogen at a standard state (Standard Temperature and Pressure; STP).

The amount of nitrogen desorbed per unit weight of the LiMO in the desorption isotherm is calculated so as to be expressed in a volume of gaseous nitrogen at the standard state (STP).

The "pore size" and the "pore volume" are determined based on the pore size distribution obtained by analyzing the adsorption isotherm and the desorption isotherm according to the BJH method.

### [Method of measuring BET specific surface area]

"BET specific surface area" (unit: m²/g) is calculated by a BET multipoint method using a value of a nitrogen adsorption amount at a relative pressure p/p₀ of up to 0.4 in the above-described adsorption isotherm.

### [Method of measuring D₁₀, D₅₀, and D₉₀]

D₁₀, D₅₀, and D₉₀ are values measured by a laser diffraction scattering method.

Specifically, 0.1 g of a powder of the LiMO is put into 50 ml of a 0.2% by mass of sodium hexametaphosphate aqueous solution to obtain a dispersion liquid in which the powder is dispersed.

Next, a particle size distribution of the obtained dispersion liquid is measured using a laser diffraction scattering particle size distribution measuring device (for example, MASTERSIZER 2000 manufactured by Malvern Panalytical Ltd.) to obtain a volume-based cumulative particle size distribution curve.

In the obtained cumulative particle size distribution curve, the value of a particle diameter at 10% cumulative from the fine particle side is D₁₀ (µm), the value of a particle diameter at 50% cumulative from the fine particle side is D₅₀ (µm), and the value of a particle size at 90% cumulative from the fine particle side is D₉₀ (µm).

### [Composition analysis of LiMO]

Composition analysis of the LiMO is performed by dissolving the powder of the LiMO in hydrochloric acid and then measuring the solution using an ICP emission spectrometer.

As the ICP emission spectrometer, for example, Optima 7300 manufactured by Perkin Elmer Inc. can be used.

### [Method of measuring tap density]

As the tap density of the LiMO or the metal composite hydroxide, a value obtained by a method described in JIS R 1628-1997 is used.

### [Method of measuring initial viscosity and viscosity ratio]

An initial viscosity and a viscosity ratio of the LiMO are measured by the following method.

First, a positive electrode mixture is adjusted.

Specifically, a paste-like positive electrode mixture is prepared by kneading the LiMO, a conductive material (acetylene black), and a binder (PVdF) in a composition of LiMO:conductive material:binder = 92:5:3 (mass ratio) and at a proportion that the concentration of solid contents is 60% by mass. During the preparation of the positive electrode mixture, N-methyl-2-pyrrolidone is used as an organic solvent.

An intrinsic viscosity of the PVdF as the binder alone used at this time is 3.1 dL/g.

In a case of measuring the initial viscosity and the viscosity ratio, the positive electrode mixture within 60 minutes after the adjustment is used as a measurement target. The obtained positive electrode mixture is subjected to measurement of an initial viscosity V (Pa·s) at a shear rate of 0.1 s⁻¹ at 25°C using a viscoelasticity measuring device (manufactured by Anton Paar Japan Co., Ltd., product name: MCR301).

In a case where the initial viscosity V is 400 Pa·s or less, it is evaluated that "initial viscosity during the adjustment of the positive electrode mixture is low".

For the positive electrode mixture after the above-described measurement of the initial viscosity V, a viscosity W (Pa·s) at a shear rate of 10 s⁻¹ at 25°C is measured. The ratio (Initial viscosity V/Viscosity W) of the initial viscosity V (Pa·s) to the viscosity W (Pa·s) is calculated as the viscosity ratio.

In a case where the viscosity ratio is 40 or less, it is evaluated that "viscosity is unlikely to change from the initial viscosity during continuous coating".

### <LiMO>

The LiMO according to the present embodiment contains at least Li and Ni, and satisfies (1) and (2) described later.

The LiMO is an aggregate of a plurality of particles.

In one aspect of the present invention, the LiMO is a powder.

The LiMO may contain only secondary particles, or may be a mixture of primary particles and secondary particles.

The "primary particles" mean particles in which apparently no grain boundary is present in a case of observing the particle in a visual field of 5,000 times to 20,000 times using a scanning electron microscope or the like.

The "secondary particles" are particles in which the above-described primary particles are aggregated. That is, the secondary particles are an aggregate of the primary particles.

The LiMO satisfies the following (1).
(1) In a pore size distribution of an adsorption isotherm which is obtained by measuring an adsorption isotherm and a desorption isotherm with a nitrogen gas according to the BJH method, a pore volume in a range where a pore size is 2 nm to 10 nm is more than 0.4 × 10⁻³ cm³/g and 1.0 × 10⁻³ cm³/g or less.

From the pore size distribution of the adsorption isotherm obtained according to [Method of measuring pore size and pore volume], a pore volume in a pore size range of 2 to 10 nm can be obtained. In the following description, pores having a pore size of 2 to 10 nm may be described as "pores X". Since the detection limit is equal to or less than the range where the pore size is less than 2 nm, in the present invention, the range of the pores X is defined as 2 to 10 nm.

The pore volume of the pores X is preferably 0.5 × 10⁻³ cm³/g or more. The pore volume of the pores X is preferably 0.9 × 10⁻³ cm³/g or less. The pore volume of the pores X is preferably more than 0.4 × 10⁻³ cm³/g and 0.9 × 10⁻³ cm³/g or less, and more preferably 0.5 × 10⁻³ cm³/g to 0.9 × 10⁻³ cm³/g.

The pores X which are fine pores are mechanically unstable. Therefore, in a case where the number of the pores X is large, the surface of the particles of the LiMO is likely to be changed due to a force applied during the adjustment of the positive electrode mixture or during the continuous coating. For example, in a case where the force is applied to the LiMO, the surface of the particles of the LiMO may be partially collapsed, and Li may be exposed.

In a case where the change such as the exposure of Li constituting the LiMO occurs, the surface of the particles of the LiMO tends to be alkaline. In an alkaline environment, the polymer which is contained in the binder contained in the positive electrode mixture is decomposed, and thus the initial viscosity of the positive electrode mixture is likely to be high during the adjustment, and the initial viscosity is likely to change during the continuous coating.

In a case where the pore volume of the pores X is equal to or less than the above-described upper limit value, it can be said that the LiMO has a small number of the pores X which are likely to collapse. Therefore, during the continuous coating of the positive electrode mixture, the surface of the particles of the LiMO is not likely to change, and during the continuous coating of the positive electrode mixture, the viscosity is not likely to change from the initial viscosity.

In a case of adjusting the positive electrode mixture, it is necessary to bind CAMs containing the LiMO to each other with a binder. In a case where the pore volume of the pores X is equal to or more than the above-described lower limit value, a surface area of the CAM containing the LiMO is increased, and thus it is easy to secure a contact interface with the binder. As a result, since the CAMs are likely to be bound to each other, the initial viscosity of the positive electrode mixture is likely to be low.

The LiMO satisfies the following (2).
(2) A/D₅₀ is 0.9 × 10⁻³ to 3.4 × 10⁻³.
(A is the average pore size (nm) based on a pore size distribution of a desorption isotherm obtained by measuring an adsorption isotherm and a desorption isotherm with a nitrogen gas according to the BJH method)

The A as the average pore size is determined from the pore size distribution of the desorption isotherm obtained according to [Method of measuring pore size and pore volume], D₅₀ (µm) is further determined according to [Method of measuring D₁₀, D₅₀, and D₉₀], and a ratio (A/D₅₀) of A to D₅₀ (µm) is calculated.

In a case where the value of A/D₅₀ is large, the pore size of the pores of the particles is large with respect to the particle diameter of the particles of the LiMO, which means that the binder is likely to enter the pores.

The A/D₅₀ is preferably 1.1 × 10⁻³ or more, and more preferably 1.2 × 10⁻³ or more. The A/D₅₀ is preferably 3.0 × 10⁻³ or less, more preferably 2.5 × 10⁻³ or less, and still more preferably 2.0 × 10⁻³ or less. The A/D₅₀ is preferably 0.9 × 10⁻³ to 3.0 × 10⁻³, more preferably 1.1 × 10⁻³ to 2.5 × 10⁻³, and still more preferably 1.2 × 10⁻³ to 2.0 × 10⁻³.

In a case where the value of A/D₅₀ is equal to or more than the above-described lower limit value, the binder is likely to enter the pores of the particles of the LiMO in the CAM in a case of adjusting the positive electrode mixture, and thus it is easy to secure the contact interface between the CAM and the binder. As a result, since the CAMs are likely to be bound to each other, the initial viscosity of the positive electrode mixture is likely to be low.

In a case where the value of A/D₅₀ is equal to or less than the above-described upper limit value, in a case of adjusting the positive electrode mixture, the CAM containing the LiMO and the binder do not excessively come into contact with each other in the pores of the particles of the LiMO, and thus a decomposition reaction of the binder is less likely to occur. As a result, the initial viscosity of the positive electrode mixture is reduced, and the initial viscosity is unlikely to change during the continuous coating.

The A of the LiMO is preferably 10 nm or more, more preferably 11 nm or more, and still more preferably 12 nm or more. The A is preferably 40 nm or less, more preferably 23 nm or less, and still more preferably 22 nm or less. The A is preferably 10 to 40 nm, more preferably 11 to 23 nm, and still more preferably 12 to 22 nm.

In a case where A is within the above-described range, the binder does not come into excessive contact with the LiMO in the CAM, and thus the decomposition reaction of the binder is less likely to occur. As a result, the initial viscosity of the positive electrode mixture is reduced, and the initial viscosity is unlikely to change during the continuous coating.

The D₅₀ of the LiMO is more preferably 5 µm or more, particularly preferably 7 µm or more, and still more preferably 9 µm or more. The D₅₀ is more preferably 20 µm or less, particularly preferably 18 µm or less, and still more preferably 16 µm or less. The D₅₀ is more preferably 5 to 20 µm, particularly preferably 7 to 18 µm, and still more preferably 9 to 16 µm.

The LiMO in which the D₅₀ is within the above-described range has few coarse particles which are likely to cause poor dispersion, and thus it is easy to improve filling properties of the CAM in a case of manufacturing the positive electrode. In addition, since the filling properties of the CAM in the positive electrode mixture are favorable, the initial viscosity is unlikely to change during the continuous coating.

The LiMO preferably satisfies the following (3).
(3) A/D₁₀ is 6.5 × 10⁻³ or less.

In a case where the value of A/D₁₀ is large, the pore size of the pores included in small particles having a relatively small size in the LiMO is large with respect to the particle diameter of the small particles, which means that the binder is likely to enter the pores.

The A/D₁₀ is preferably 6.0 × 10⁻³ or less, more preferably 5.5 × 10⁻³ or less, and still more preferably 5.0 × 10⁻³ or less.

The lower limit value of A/D₁₀ is not particularly limited, and examples thereof include 1.0 × 10⁻³ or more, 1.2 × 10⁻³ or more, 1.4 × 10⁻³ or more, and 1.5 × 10⁻³ or more.

The A/D₁₀ is more preferably 1.0 × 10⁻³ to 6.5 × 10⁻³, still more preferably 1.2 × 10⁻³ to 6.0 × 10⁻³, particularly preferably 1.4 × 10⁻³ to 5.5 × 10⁻³, and most preferably 1.5 × 10⁻³ to 5.0 × 10⁻³.

In a case where the value of A/D₁₀ is equal to or more than the above-described lower limit value, in the small particles contained in the LiMO, pores having an appropriate size are formed, so that, in a case of adjusting the positive electrode mixture, the binder is likely to enter the pores. Therefore, even in the case of the small particles contained in the LiMO, it is easy to secure the contact interface between the CAM and the binder. As a result, since the CAMs are likely to be bound to each other, the initial viscosity of the positive electrode mixture is likely to be low.

In a case where the value of A/D₁₀ is equal to or less than the above-described upper limit value, the CAM containing the LiMO and the binder do not come into excessive contact with each other in the pores of the small particles contained in the LiMO, and thus the decomposition reaction of the binder is less likely to occur. As a result, the initial viscosity of the positive electrode mixture is likely to be low, and thus the initial viscosity is unlikely to change during the continuous coating.

The LiMO preferably satisfies the following (4).
(4) A/D₉₀ is 1.9 × 10⁻³ or less.

In a case where the value of A/D₉₀ is large, dispersibility of the particles of the LiMO is high, and the pore size of the pores included in relatively large particles in the LiMO is large with respect to the particle diameter of the large particles, which means that the binder is likely to enter the pores.

The A/D₉₀ is preferably 1.7 × 10⁻³ or less, more preferably 1.5 × 10⁻³ or less, and still more preferably 1.3 × 10⁻³ or less.

The lower limit value of A/D₉₀ is not particularly limited, and examples thereof include 0.1 × 10⁻³ or more, 0.2 × 10⁻³ or more, 0.4 × 10⁻³ or more, and 0.5 × 10⁻³ or more.

The A/D₉₀ is more preferably 0.1 × 10⁻³ to 1.9 × 10⁻³, still more preferably 0.2 × 10⁻³ to 1.7 × 10⁻³, even still more preferably 0.4 × 10⁻³ to 1.5 × 10⁻³, and most preferably 0.5 × 10⁻³ to 1.3 × 10⁻³.

In a case where the value of A/D₉₀ is equal to or more than the above-described lower limit value, the aggregation of the particles of the LiMO is suppressed, so that the dispersibility of the LiMO in the binder is likely to be improved and the binder is likely to enter the pores of the LiMO. Therefore, it is easy to secure the contact interface between the CAM containing the LiMO and the binder. As a result, the CAMs are likely to be bound to each other, and thus the initial viscosity of the positive electrode mixture is likely to be low.

In a case where the value of A/D₉₀ is equal to or less than the above-described upper limit value, packing property of the particles is favorable, the CAM containing the LiMO and the binder do not come into excessive contact with each other in the pores of the large particles contained in the LiMO, and thus the decomposition reaction of the binder is less likely to occur. As a result, the initial viscosity of the positive electrode mixture is likely to be low, and thus the initial viscosity is unlikely to change during the continuous coating.

The LiMO preferably satisfies the following (5).

(5) in the above-described pore size distribution of the adsorption isotherm, a pore volume in a range where a pore size is more than 10 nm and 200 nm or less is 8.0 × 10⁻³ cm³/g or less.

In the following description, pores having a pore size of more than 10 nm and 200 nm or less may be described as "pores Y".

Since the LiMO satisfying (5) has a small number of the pores Y which are likely to collapse, the surface of the particles of the LiMO is unlikely to change during the adjustment of the positive electrode mixture or during the continuous coating, the initial viscosity of the positive electrode mixture is likely to be adjusted to a low range, and the initial viscosity is unlikely to change during the continuous coating.

The pore volume of the pores Y is preferably 7.5 × 10⁻³ cm³/g or less, more preferably 7.0 × 10⁻³ cm³/g or less, and still more preferably 6.5 × 10⁻³ cm³/g or less.

The lower limit value of the pore volume of the pores Y is not particularly limited, and examples thereof include 1.0 × 10⁻³ cm³/g, 1.5 × 10⁻³ cm³/g, 2.0 × 10⁻³ cm³/g, 3.0 × 10⁻³ cm³/g, and 3.8 × 10⁻³ cm³/g.

The pore volume of the pores Y is more preferably 1.0 × 10⁻³ to 8.0 × 10⁻³ cm³/g, still more preferably 1.5 × 10⁻³ to 7.5 × 10⁻³ cm³/g, particularly preferably 2.0 × 10⁻³ to 7.0 × 10⁻³ cm³/g, particularly more preferably 3.0 × 10⁻³ to 6.5 × 10⁻³ cm³/g, and most preferably 3.8 × 10⁻³ to 6.5 × 10⁻³ cm³/g.

A BET specific surface area of the LiMO is preferably 0.5 m²/g or more, more preferably 0.6 m²/g or more, still more preferably 0.7 m²/g or more, and particularly preferably more than 0.8 m²/g. The BET specific surface area is preferably 1.5 m²/g or less, more preferably 1.44 m²/g or less, and still more preferably 1.40 m²/g or less. The BET specific surface area is preferably 0.5 to 1.5 m²/g, more preferably 0.6 to 1.44 m²/g, still more preferably 0.7 to 1.40 m²/g, and particularly preferably more than 0.8 m²/g and 1.40 m²/g or less.

As the surface area of the LiMO is larger, the viscosity of the positive electrode mixture tends to be higher. In a case where the BET specific surface area is equal to or less than the above-described upper limit value, the viscosity of the positive electrode mixture is unlikely to increase. In a case where the BET specific surface area is equal to or more than the above-described lower limit value, it is easy to secure the binding interface with the binder, and it is easy for the CAMs containing the LiMO to bind to each other. As a result, the initial viscosity of the positive electrode mixture is likely to be low.

The tap density of the LiMO is preferably 2.5 g/cm³ or more, more preferably 2.6 g/cm³ or more, and still more preferably 2.7 g/cm³ or more. The tap density is preferably 3.1 g/cm³ or less, more preferably 3.0 g/cm³ or less, and still more preferably 2.95 g/cm³ or less. The tap density is preferably 2.5 to 3.1 g/cm³, more preferably 2.6 to 3.0 g/cm³, and still more preferably 2.7 to 2.95 g/cm³.

In a case where the tap density is within the above-described range, it is easy to improve the filling properties of the CAM containing the LiMO in a case of manufacturing the positive electrode. As a result, since the filling properties of the CAM in the positive electrode mixture are favorable, the initial viscosity is unlikely to change during the continuous coating.

The LiMO preferably contains at least Li, Ni, and M1 described later, and may contain M2 described later. The LiMO is preferably represented by the following compositional formula (I).

Li[Liₓ(Ni_{(1-y-z)}M1_{y}M2_{z})₁₋ₓ]O₂ ... (I)

(in the compositional formula (I), M1 is one or more elements selected from the group consisting of Co, Mn, and Al, M2 is one or more elements selected from the group consisting of Fe, Cu, Ti, Mg, W, Mo, Nb, Zn, Sn, Zr, Ga, B, Si, S, and P, and the compositional formula (I) satisfies -0.1 ≤ x ≤ 0.2, 0 < y ≤ 0.7, and 0 ≤ z ≤ 0.2)

From the viewpoint of obtaining a lithium secondary battery having excellent cycle characteristics, x in the compositional formula (I) is more preferably -0.05 or more, and still more preferably -0.01 or more. In addition, from the viewpoint of obtaining a lithium secondary battery having a higher initial coulombic efficiency, x is more preferably 0.08 or less, and still more preferably 0.06 or less.

The upper limit value and lower limit value of x can be randomly combined together. Examples of the combination of x include 0.2 or less and more than 0, -0.05 to 0.1, -0.05 to 0.08, and -0.01 to 0.06.

From the viewpoint of obtaining a lithium secondary battery having low battery internal resistance, y in the compositional formula (I) is more preferably 0.005 or more. y is more preferably 0.5 or less, still more preferably 0.4 or less, and particularly preferably 0.3 or less.

y is more preferably more than 0 and 0.5 or less, still more preferably 0.005 to 0.4, and particularly preferably 0.005 to 0.3.

In a case where the compositional formula (I) contains M2, from the viewpoint of obtaining a lithium secondary battery having low battery internal resistance, z in the compositional formula (I) is more preferably 0.005 or more. z is more preferably 0.1 or less, still more preferably 0.05 or less, and particularly preferably 0.03 or less.

z is more preferably 0.005 to 0.1, still more preferably 0.005 to 0.05, and particularly preferably 0.005 to 0.03.

y + z is more preferably 0.5 or less, and still more preferably 0.3 or less. y + z is more preferably 0.005 or more, and still more preferably 0.01 or more. y + z is more than 0 and 0.9 or less, and examples thereof include more than 0 and 0.5 or less, more than 0 and 0.3 or less, 0.005 to 0.5, and 0.01 to 0.3. The compositional formula (I) preferably satisfies 0 < y + z ≤ 0.3.

From the viewpoint of obtaining a lithium secondary battery having a high cycle retention rate, M2 is more preferably one or more elements selected from the group consisting of W, B, Nb, and Zr.

As the compositional formula (I), the following compositional formula (I)-1 is preferable.

Li[Liₓ(Ni_{(1-y-z)}M1_{y}M2_{z})₁₋ₓ]O₂ ... (I)-1

(In the compositional formula (1)-1, M1 is one or more elements selected from the group consisting of Co, Mn, and Al, M2 is one or more elements selected from the group consisting of W, B, Nb, and Zr, and the compositional formula (I)-1 satisfies -0.05 ≤ x ≤ 0.1, 0.005 < y ≤ 0.3, 0 ≤ z ≤ 0.2, and 0 < y + z ≤ 0.3).

The LiMO preferably has a layered structure, and more preferably has a hexagonal crystal structure or a monoclinic crystal structure.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

In addition, the monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Among these, in order to obtain a lithium secondary battery having a high discharge capacity, the crystal structure is still more preferably a hexagonal crystal structure belonging to the space group R-3m or a monoclinic crystal structure belonging to the space group C2/m.

The crystal structure of the LiMO can be confirmed by observation using a powder X-ray diffractometer (for example, Ultima IV manufactured by Rigaku Corporation).

### <Method for producing LiMO>

A method for producing the LiMO includes at least production of MCC, mixing of the MCC with a lithium compound, calcining of a mixture of the MCC and the lithium compound, and crushing of a reactant obtained by the calcining.

### (1) Production of MCC

The MCC is a compound containing Ni and the M1 and M2 which are optional elements, and it is preferably any one of a metal composite hydroxide, a metal composite oxide, or a mixture thereof, which contains each element at a compositional ratio represented by the following Formula (II).

Ni:M1:M2=(1 - y -z):y:z (II)

(in the formula (II), y, z, M1, and M2 are each the same as y, z, M1, and M2 in the compositional formula (I) described above)

First, a metal composite hydroxide containing Ni and the optional element M1 is prepared. During the adjustment of the metal composite hydroxide, the optional element M2 may be added. The metal composite hydroxide can be produced by a batch-type co-precipitation method or a continuous co-precipitation method.

Examples of a method for producing a metal composite hydroxide containing Ni, Co, and Al include a method in which a nickel salt solution, a cobalt salt solution, an aluminum salt solution, and a complexing agent are reacted with each other by a continuous co-precipitation method described in JP-A-2002-201028 to produce a metal composite hydroxide represented by Ni_{(1-y1-y2)}Co_{y1}Al_{y2}(OH)₂ (y1 + y2 = y).

As a nickel salt which is a solute of the nickel salt solution, for example, at least one of nickel sulfate, nickel nitrate, nickel chloride, or nickel acetate can be used.

As a cobalt salt which is a solute of the cobalt salt solution, for example, at least one of cobalt sulfate, cobalt nitrate, cobalt chloride, or cobalt acetate can be used.

As an aluminum salt which is a solute of the aluminum salt solution, at least one of aluminum sulfate, aluminum nitrate, aluminum chloride, or aluminum acetate can be used.

In a case of producing MCC containing Mn, as a manganese salt which is a solute of a manganese salt solution, for example, any one or two or more of manganese sulfate, manganese nitrate, and manganese chloride can be used.

The above metal salts are used at ratios corresponding to the compositional ratio of the formula (II) described above. In addition, as a solvent, water is used.

The complexing agent is capable of forming a complex with a nickel ion, a cobalt ion, and an aluminum ion in an aqueous solution; and examples thereof include ammonium ion donors, hydrazine, ethylenediaminetetraacetic acid, nitrilotriacetic acid, uracildiacetic acid, and glycine. The ammonium ion donors are, for example, ammonium hydroxide, ammonium sulfate, ammonium chloride, ammonium carbonate, ammonium fluoride, and the like.

In the production step of the metal composite hydroxide, regarding an amount of the complexing agent which is contained in a mixed solution containing the metal salt solution (for example, the nickel salt solution, the cobalt salt solution, or the aluminum salt solution), and the complexing agent, for example, a mole ratio of the complexing agent to the sum of the number of moles of the metal salts (the nickel salt, the cobalt salt, and the aluminum salt) is more than 0 and 2.0 or less.

In a case where the ammonium ion donor is used as the complexing agent, a concentration of ammonia (NH₃) with respect to the total volume of the solution in the reaction vessel is preferably 5 to 14 g/L, more preferably 8 to 13 g/L, and still more preferably 10 to 12 g/L. The solution in the reaction vessel refers to a solution present in the reaction vessel before the next operation is performed after the complexing agent is added. The solution may contain another liquid in addition to the above-described mixed solution.

In the co-precipitation method, in order to adjust the pH value of the above-described mixed solution, an aqueous solution of an alkali metal hydroxide is added to the mixed solution before the pH of the mixed solution changes from alkaline to neutral. The alkali metal hydroxide is, for example, sodium hydroxide or potassium hydroxide.

The value of pH in the present specification is defined as a value measured in a case where the temperature of the mixed solution is 40°C. The pH of the mixed solution is measured in a case where the temperature of the mixed solution sampled from a reaction vessel reaches 40°C. In a case where the sampled mixed solution is not 40°C, the mixed solution is calcined or cooled to 40°C, and then the pH is measured.

During the reaction, the temperature of the reaction vessel is controlled to be, for example, within a range of 20°C to 80°C, preferably 30°C to 70°C.

In addition, in the reaction, the pH value in the reaction vessel is set to be, for example, in a range of 9 to 13, preferably in a range of 10 to 12.5, and the pH is controlled within ±0.5.

As the reaction vessel which is used in the continuous co-precipitation method, an overflow type reaction vessel can be used to separate the formed reaction precipitate.

In a case of producing the metal composite hydroxide by a batch co-precipitation method, examples of the reaction vessel include a reaction vessel which does not include a overflow pipe, and a device that has a mechanism for concentrating the overflowed reaction precipitate in a concentrating tank connected to the overflow pipe and circulating it back to the reaction vessel.

A stirring speed of a stirrer in the reaction vessel is preferably 800 to 1,000 rpm.

Various gases, for example, an inert gas such as nitrogen, argon, and carbon dioxide, an oxidizing gas such as an air and oxygen, or a mixed gas thereof, may be supplied into the reaction vessel.

After the above-described reaction, the neutralized reaction precipitate is isolated. As the isolation, for example, a method of dewatering a slurry containing the reaction precipitate by centrifugal separation, suction filtration, or the like is used.

The isolated reaction precipitate is dried and sieved to obtain the metal composite hydroxide.

The reaction precipitate may be washed before the isolation. The reaction precipitate is preferably washed with water or an alkaline washing liquid. In the present embodiment, the reaction precipitate is preferably washed with an alkaline washing liquid and more preferably washed with a sodium hydroxide aqueous solution. In addition, the reaction precipitate may be washed using a washing liquid containing a sulfur element. Examples of the washing liquid containing a sulfur element include a sulfate aqueous solution of potassium or sodium.

By the above steps, a metal composite hydroxide which is MCC can be produced. The tap density of the metal composite hydroxide is preferably 1.40 to 2.0 g/cm³ and more preferably 1.5 to 1.9 g/cm³. Since the metal composite hydroxide having a tap density in the above-described range has few pores, the LiMO satisfying (1) can be produced by using such a metal composite hydroxide. In addition, in a case where the metal composite hydroxide having a tap density in the above-described range is used, the metal composite hydroxide is easily uniformly reacted with the lithium compound in the subsequent step, and thus the BET specific surface area of the LiMO can be reduced.

By appropriately adjusting the ammonia concentration and the stirring speed of the stirrer in the reaction vessel described above, the tap density of the metal composite hydroxide can be controlled within the above-described range.

By appropriately controlling the concentration of the metal salt supplied to the reaction vessel, the temperature of the reaction vessel, the pH, the ammonia concentration, the stirring speed of the stirrer in the reaction vessel, and the like, the BET specific surface area of the LiMO finally obtained, the pore volume of the pores X, and the pore volume of the pores Y can be controlled within the above-described ranges.

In a case where the MCC is a metal composite oxide, the metal composite hydroxide is calcined to produce the metal composite oxide. A plurality of calciningcalcining steps may be carried out as necessary. The calcining temperature in the present specification means a set temperature of a calcining device. In a case of having a plurality of calcining steps, the calcining temperature means a temperature when the metal composite hydroxide is calcined at the highest retention temperature among individual calcining steps.

A calcining temperature is preferably 400°C to 700°C and more preferably 450°C to 680°C. In a case where the calcining temperature is 400°C to 700°C, a metal composite oxide in which the metal composite hydroxide is sufficiently oxidized and the BET specific surface area is in an appropriate range is easily obtained.

Examples of a time for retaining at the above-described calcining temperature include 0.1 to 20 hours, and the time is preferably 0.5 to 10 hours. A temperature rising rate to the above-described calcining temperature is, for example, 50 to 400 °C/hour. In addition, as the calcining atmosphere, it is possible to use an air, oxygen, nitrogen, argon, or a mixed gas thereof.

The inside of the calcining device may be under an appropriate oxygen-containing atmosphere. The oxygen-containing atmosphere may be a mixed gas atmosphere of an inert gas and an oxidizing gas, or may be a state in which an oxidizing agent is present in an inert gas atmosphere. In a case where the inside of the calcining device is an appropriate oxygen-containing atmosphere, a transition metal which is contained in the metal composite hydroxide is appropriately oxidized, and it is easier to control a form of the metal composite oxide.

As oxygen or the oxidizing agent in the oxygen-containing atmosphere, a sufficient number of oxygen atoms need to be present in order to oxidize the transition metal.

In a case where the oxygen-containing atmosphere is a gas mixture atmosphere of an inert gas and an oxidizing gas, the atmosphere in the calcining device can be controlled by a method such as aeration of the oxidizing gas into the calcining device or bubbling of the oxidizing gas in the mixed solution.

As the oxidizing agent, it is possible to use a peroxide such as hydrogen peroxide, a peroxide salt such as permanganate, perchloric acid, hypochlorous acid, nitric acid, halogen, ozone, or the like.

### (2) Mixing of MCC with lithium compound

The present step is a step of mixing the MCC with a lithium compound to obtain a mixture of the MCC and the lithium compound.

The MCC obtained as described above is mixed with a lithium compound. The MCC may be classified appropriately before the mixing.

As the lithium compound, at least one of lithium carbonate, lithium nitrate, lithium acetate, lithium hydroxide, lithium oxide, lithium chloride, or lithium fluoride can be used. Among the above, any one of lithium hydroxide and lithium carbonate or a mixture thereof is preferable.

The lithium compound and the MCC are mixed in consideration of the compositional ratio of a final target product to obtain the mixture. Specifically, the lithium compound and the MCC are mixed at ratios corresponding to the compositional ratio of the compositional formula (I) described above. An amount (mole ratio) of Li contained in the lithium compound with respect to the total amount 1 of elements other than an oxygen element, which are contained in the MCC, is preferably 1.00 or more and more preferably 1.02 or more.

### (3) Calcining of mixture

The mixture of the MCC and the lithium compound is calcined to obtain a calcined product.

It is preferable that the calcining includes preliminary calcining and main calcining. The preliminary calcining is calcining at a temperature lower than a calcining temperature in the main calcining described later (in a case where the calcining step described later has a plurality of calcining stages, a calcining temperature in the calcining stage at the lowest temperature). The preliminary calcining may be performed a plurality of times.

The preliminary calcining or the main calcining may be performed using any of a continuous calcining furnace or a fluidized calcining furnace. Examples of the continuous calcining furnace include a tunnel furnace and a roller hearth kiln. As the fluidized calcining furnace, a rotary kiln may be used.

However, the fluidized calcining furnace is used as a calcining device for any one of the preliminary calcining or the main calcining. It is preferable that the preliminary calcining is performed using a fluidized calcining furnace.

In the fluidized calcining furnace, an object to be calcined is calcined while being stirred. Therefore, the object to be calcined and oxygen are uniformly in contact with each other, and the reaction in the fluidized calcining furnace proceeds uniformly. In addition, during the fluidized calcining, secondary particles of the calcined product are worn out from each other, and thus the surface of the secondary particles is smoothed, which makes it difficult for the pores X to be formed. As a result, it is easy to obtain the LiMO satisfying (1) and (2) described above. The object to be calcined is, for example, the mixture of the MCC and the lithium compound, or a reactant of the MCC and the lithium compound.

A powder flow velocity of the fluidized calcining furnace is preferably controlled in a range of 20 to 50 m/hour. By appropriately controlling the powder flow velocity, the pore volume, A, A/D₅₀, A/D₁₀, and A/D₉₀ of the pores X of the LiMO finally obtained can be controlled within the above-described ranges.

A temperature during the preliminary calcining is preferably 400°C or higher and lower than 700°C, more preferably 500°C to 695°C, and still more preferably 600°C to 690°C. In a case where the calcining temperature is 400°C or higher, the reaction between the MCC and the lithium compound is promoted.

The calcining temperature in the present specification means the temperature of the atmosphere in the calcining furnace, and is the highest temperature of temperatures retained in the calcining step (hereinafter, referred to as the highest retention temperature). In a case where the calcining step includes a plurality of calcining stages, the calcining temperature means the temperature of a stage in which the calcining is performed at the highest retention temperature among the stages.

A retention time during the preliminary calcining is preferably 0.5 to 8 hours, more preferably 0.6 to 4 hours, and still more preferably 0.7 to 3 hours. In a case where the retention time in the preliminary calcining is 0.5 hours or more, the reaction between the MCC and the lithium compound is sufficiently enhanced, and thus the pores X are less likely to be formed. As a result, it is easy to obtain the LiMO satisfying (1) described above. In a case where the retention time in the calcining is 8 hours or less, it is possible to obtain a lithium secondary battery in which volatilization of lithium ions is unlikely to occur and which has excellent cycle characteristics.

As the calcining atmosphere during the preliminary calcining, it is possible to use air, oxygen, nitrogen, argon, or a mixed gas thereof.

The preliminary calcined product obtained by the preliminary calcining is subjected to main calcining.

As the calcining atmosphere in the main calcining, an air, oxygen, nitrogen, argon, a mixed gas thereof, or the like is used depending on a desired composition.

The calcining temperature of the main calcining is preferably 700°C to 950°C and more preferably 720°C to 900°C. The retention time in the main calcining is, for example, 3 to 10 hours. By appropriately controlling the calcining temperature in the main calcining, the D₅₀ of the LiMO finally obtained can be controlled to be in the above-described range.

In the main calcining, a temperature rising rate until reaching the highest retention temperature is preferably 115 °C/hour or more, more preferably 120 °C/hour or more, and still more preferably 125 °C/hour or more.

By calcining the mixture of the MCC and the lithium compound as described above, a calcined product is obtained.

### (4) Washing step

After the calcining step, the calcined product may be washed to remove unreacted lithium compounds remaining. For the washing, a washing liquid such as pure water and an alkaline washing liquid can be used. Examples of the alkaline washing liquid include aqueous solutions of one or more anhydrides selected from the group consisting of lithium hydroxide, sodium hydroxide, potassium hydroxide, lithium carbonate, sodium carbonate, potassium carbonate, and ammonium carbonate, and aqueous solutions of a hydrate thereof. In addition, aqueous ammonia can also be used as the alkaline washing liquid.

A temperature of the washing liquid is preferably 15°C or lower, more preferably 10°C or lower, and still more preferably 8°C or lower. By controlling the temperature of the washing liquid within a range in which the washing liquid does not freeze and within the above-described range, excessive elution of lithium ions from the crystal structure of the calcined product into the washing liquid during the washing can be suppressed.

Examples of a method of bringing the washing liquid into contact with the calcined product include a method of putting the calcined product into each washing liquid and stirring the washing liquid. In addition, a method of applying each washing liquid to the calcined product as shower water may be used. Furthermore, a method may be adopted in which the calcined product is put into the washing liquid, stirred, and then separated from each washing liquid, and each washing liquid is used as shower water and poured onto the calcined product after the separation.

In the washing, it is preferable to bring the washing liquid and the calcined product into contact with each other for an appropriate range of time. The "appropriate time" in the washing refers to a time during which each particle of the calcined product is dispersed while removing an unreacted lithium compound remaining on the surface of the calcined product. The washing time is preferably adjusted depending on the aggregation state of the calcined product. The washing time is preferably, for example, in a range of 5 minutes to 1 hour.

A proportion of the calcined product to the mixture (hereinafter, may be described as a slurry) of the washing liquid and the calcined product is preferably 10% to 60% by mass, more preferably 20% to 50% by mass, and still more preferably more than 30% by mass and 50% by mass or less. In a case where the proportion of the calcined product is 10% to 60% by mass, the unreacted lithium compound can be removed.

It is preferable to subject the washed and, as necessary, dewatered calcined product to a heat treatment. The temperature of the heat treatment is not particularly limited, but from the viewpoint that it is possible to prevent a decrease in charge capacity, it is preferably 100°C or higher, more preferably 130°C or higher, and still more preferably 150°C or higher. In addition, the upper limit of the temperature of the heat treatment is not particularly limited, but is preferably 700°C or lower, more preferably 600°C or lower, and still more preferably 400°C or lower.

The amount of lithium ions volatilized can be controlled by the temperature of the heat treatment.

The temperature of the heat treatment is preferably 100°C to 700°C, more preferably 130°C to 600°C, and still more preferably 150°C to 400°C.

Examples of the atmosphere in the heat treatment include an oxygen atmosphere, an inert atmosphere, a reduced pressure atmosphere, and a vacuum atmosphere. In a case where the heat treatment after the washing is performed in the above-described atmosphere, a reaction between the calcined product and moisture or carbon dioxide in the atmosphere is suppressed during the heat treatment, and thus the calcined product containing a few impurities can be obtained.

### (5) Crushing of calcined product

In a case where the calcined product is crushed by applying an appropriate external force to adjust a dispersion state of the particles, the LiMO satisfying (2) described above can be obtained.

The "appropriate external force" refers to an external force to the extent that the aggregation state is dispersed without breaking the particles of the calcined product. In the present embodiment, it is preferable to use a grinder as a disintegrator, and it is more preferable to use a stone mill type grinder such as a masscolloider. In a case where the stone mill type grinder is used, it is preferable that A gap between an upper millstone and a lower millstone is adjusted according to the aggregation state of the particles in the calcined product. The gap between the upper millstone and the lower millstone is preferably in a range of 10 to 200 µm. The rotation speed of the stone mill type grinder is preferably 500 to 2,000 rpm.

For example, in a case where the calcined product after the crushing is crushed to have D₅₀ of 5 to 20 µm, the pores X formed by the aggregation of the primary particles having unevenness can be reduced.

After the above-described crushing, the crushing may be further performed using a pin mill. A rotation speed of the pin mill is preferably 2,000 rpm or more and less than 15,000 rpm. In a case where the crushing is performed using a pin mill at a rotation speed of 15,000 rpm or more, the secondary particles are collapsed and the pores X are likely to be formed, which is not preferable. By appropriately controlling the rotation speed of the pin mill, the tap density of the LiMO finally obtained can be controlled to be within the above-described range.

The method for producing the LiMO has been described above, but the present invention is not limited to the LiMO produced by the production method. Any production method can be adopted to the present invention as long as it is a production method in which the LiMO satisfying (1) and (2) described above is obtained.

### <CAM>

The CAM according to the present embodiment contains the LiMO produced by the above-described method. A content proportion of the LiMO with respect to the total mass (100% by mass) of the CAM is preferably 70% to 99% by mass and more preferably 80% to 98% by mass.

The content proportion of the LiMO with respect to the total mass of the CAM is determined by irradiating the CAM with an electron beam at an acceleration voltage of 20 kV using SEM (for example, JSM-5510 manufactured by JEOL Ltd.) and performing SEM observation. The magnification of the SEM photograph is adjusted to a magnification at which 200 to 400 CAM particles, which are the subject, are present in the SEM photograph. As an example, the magnification may be 1,000 to 30,000 times.

### <Lithium secondary battery>

A positive electrode for lithium secondary battery, suitable for a case in which the LiMO is used as the CAM, will be described. Hereinafter, the positive electrode for lithium secondary battery will be referred to as a positive electrode in some cases.

Furthermore, a lithium secondary battery suitable as a positive electrode application will be described.

An example of the lithium secondary battery which is suitable in a case where the LiMO is used as the CAM has a positive electrode, an anode, a separator interposed between the positive electrode and the anode, and an electrolytic solution disposed between the positive electrode and the anode.

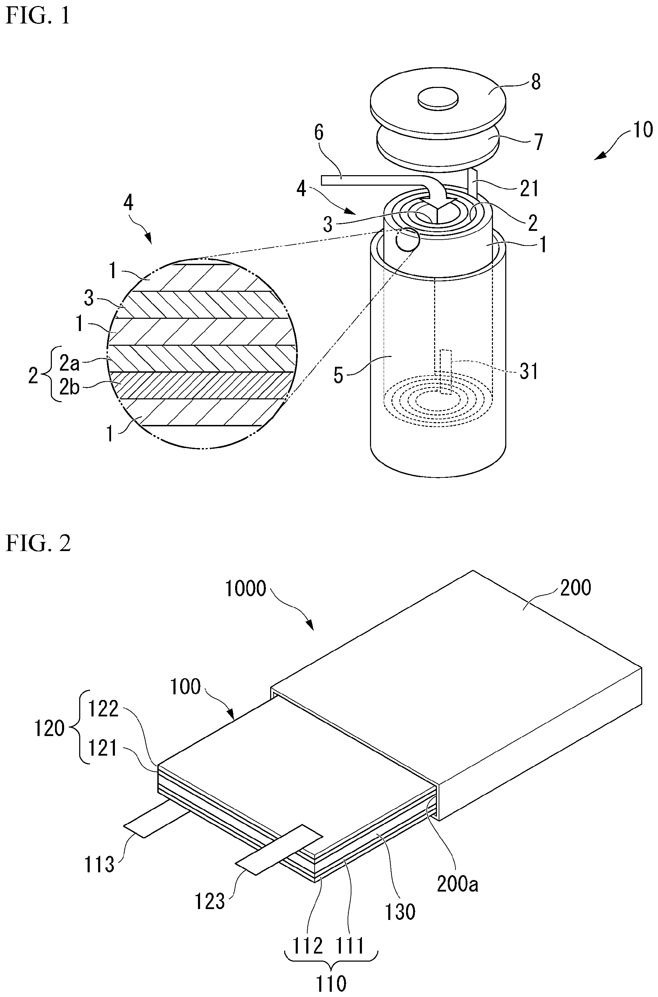

FIG. 1 is a schematic view showing an example of the lithium secondary battery. For example, a cylindrical lithium secondary battery 10 is manufactured as described below.

First, as shown in the partially enlarged view of FIG. 1, a pair of separators 1 having a strip shape, a strip-shaped positive electrode 2 having a positive electrode lead 21 at one end, and a strip-shaped anode 3 having an anode lead 31 at one end are laminated in order of the separator 1, the positive electrode 2, the separator 1, and the anode 3 are wound to form an electrode group 4.

The positive electrode 2 includes, for example, a positive electrode active material layer 2a containing the CAM and a positive electrode current collector 2b having the positive electrode active material layer 2a formed on one surface thereof. The positive electrode 2 can be produced by first preparing a positive electrode mixture containing the CAM, a conductive material, and a binder, and supporting the positive electrode mixture on one surface of the positive electrode current collector 2b to form a positive electrode active material layer 2a.

As an example of the anode 3, an electrode in which an anode material mixture containing an anode active material (not shown) is supported on an anode current collector, and an electrode consisting of an anode active material alone are exemplary examples, and the anode 3 can be produced in a manner similar to that for the positive electrode 2.

Next, the electrode group 4 and an insulator (not shown) are accommodated in a battery can 5, and a can bottom is sealed. The electrode group 4 is impregnated with an electrolytic solution 6, and an electrolyte is disposed between the positive electrode 2 and the anode 3. Furthermore, the upper portion of the battery can 5 is sealed with a top insulator 7 and a sealing body 8, whereby the lithium secondary battery 10 can be produced.

Examples of a shape of the electrode group 4 include a columnar shape in which the cross-sectional shape is a circle, an ellipse, a rectangle, or a rectangle with rounded corners, in a case where the electrode group 4 is cut in a direction perpendicular to a winding axis.

In addition, as the shape of the lithium secondary battery having such an electrode group 4, a shape that is specified by IEC60086, which is a standard for battery specified by the International Electrotechnical Commission (IEC) or by JIS C 8500, can be adopted. For example, shapes such as a cylindrical shape and a square shape can be exemplary examples.

Furthermore, the lithium secondary battery is not limited to the above-described winding-type configuration, and may have a lamination-type configuration of a laminated structure in which the positive electrode, the separator, the anode, and the separator are repeatedly stacked. As the lamination-type lithium secondary battery, a so-called coin-type battery, button-type battery, or paper-type (or sheet-type) battery can be exemplary examples.

For the positive electrode, the separator, the anode, and the electrolytic solution constituting the lithium secondary battery, for example, the configurations, materials, and production methods described in [0113] to [0140] of WO2022/113904A1 can be used.

### <All-solid-state lithium secondary battery>

The LiMO can be used as the CAM of the all-solid-state lithium secondary battery.

FIG. 2 is a schematic view showing an example of the all-solid-state lithium secondary battery. An all-solid-state lithium secondary battery 1000 shown in FIG. 2 has a laminate 100 having a positive electrode 110, an anode 120, and a solid electrolyte layer 130, and an exterior body 200 accommodating the laminate 100. In addition, the all-solid-state lithium secondary battery 1000 may have a bipolar structure in which the CAM and an anode active material are disposed on both sides of a current collector. Specific examples of the bipolar structure include the structures described in JP-A-2004-95400.

The positive electrode 110 has a positive electrode active material layer 111 and a positive electrode current collector 112. The positive electrode active material layer 111 contains the above-described CAM and a solid electrolyte. In addition, the positive electrode active material layer 111 may contain a conductive material and a binder.

The anode 120 has an anode active material layer 121 and the anode current collector 122. The anode active material layer 121 contains an anode active material. In addition, the anode active material layer 121 may contain a solid electrolyte and a conductive material.

The laminate 100 may have an external terminal 113 which is connected to a positive electrode current collector 112 and an external terminal 123 which is connected to an anode current collector 122. In addition, the all-solid-state lithium secondary battery 1000 may have a separator between the positive electrode 110 and the anode 120.

The all-solid-state lithium secondary battery 1000 further has an insulator (not shown) which insulates the laminate 100 and the exterior body 200 from each other and a sealant (not shown) which seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin-type, a button type, a paper-type (or a sheet-type), a cylindrical type, a square shape, and a laminate type (pouch type) can be exemplary examples.

As the example of the all-solid-state lithium secondary battery 1000, a form in which one laminate 100 is provided is shown in the drawing, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

For the all-solid-state lithium secondary battery, for example, the configurations, materials, and production methods described in [0151] to [0181] of WO2022/113904A1 can be used.

Next, the present invention will be described in more detail with reference to Examples.

### [Examples]

Hereinafter, the present invention will be described in detail with examples, but the present invention is not limited to the following description.

### <Composition analysis>

Composition analysis of LiMO produced by a method described later was carried out by the method described in [Composition analysis of LiMO] above.

### <Pore size and pore volume>

In the LiMO produced by the method described later, a pore size (cm³/g) of pores X, an average pore size A (nm), and a pore volume (cm³/g) of pores Y were determined as described in [Method of measuring pore size and pore volume] above.

### <Measurement of BET specific surface area>

A BET specific surface area of the LiMO produced by the method described later was measured as described in [Method of measuring BET specific surface area] above.

### <Method of measuring D₁₀, D₅₀, and D₉₀>

D₁₀, D₅₀, and D₉₀ of the LiMO produced by the method described later were measured as described in [Method of measuring D₁₀, D₅₀, and D₉₀] above; and A/D₅₀, A/D₁₀, and A/D₉₀ were calculated from the obtained values and the average pore size A.

### <Method of measuring tap density>

Tap densities of the metal composite hydroxide and the LiMO produced by the method described later were measured as described in [Method of measuring tap density] above.

### <Method of measuring initial viscosity and viscosity ratio>

An initial viscosity and a viscosity ratio of a positive electrode mixture using the LiMO produced by the method described later were measured as described in [Method of measuring initial viscosity and viscosity ratio] above.

### (Example 1)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a cobalt sulfate aqueous solution, and an aluminum sulfate aqueous solution at a ratio at which a mole ratio of Ni, Co, and Al was 0.88:0.09:0.03.

Next, while stirring the reaction vessel at 800 rpm, the mixed raw material solution and an ammonium sulfate aqueous solution were continuously added to the reaction vessel at a rate at which a NH₃ concentration in the reaction vessel was 12 g/L. While stirring at 800 rpm, a sodium hydroxide aqueous solution was added dropwise thereto as appropriate such that a pH in the reaction vessel was 11.6 (measurement temperature: 40°C), thereby obtaining a reaction precipitate 1.

The reaction precipitate 1 was washed, dewatered, dried, and sieved to obtain a metal composite hydroxide 1 containing Ni, Co, and Al. The tap density of the metal composite hydroxide 1 was 1.51 g/cm³.

The metal composite hydroxide 1 was calcined in an atmospheric air at 650°C for 5 hours, and cooled to room temperature to obtain MCC(1) as a metal composite oxide.

A predetermined amount of lithium hydroxide was weighed such that the amount (mole ratio) of Li with respect to the total amount 1 of Ni, Co, and Al contained in the MCC(1) was 1.02. The MCC1 and the lithium hydroxide were mixed with each other to obtain a mixture 1.

The mixture 1 was put into a furnace tube of a rotary kiln (manufactured by NORITAKE CO., LIMITED, product name: Desk Top Rotary Kiln), and preliminarily calcined under conditions of a powder flow velocity of 33 m/hour, a set temperature of a heater calcining part of the furnace tube of 690°C, and a retention time of 2 hours to obtain a reactant 1 of the MCC(1) and the lithium hydroxide.

The obtained reactant 1 was put into a furnace of a roller hearth kiln (manufactured by NORITAKE CO., LIMITED, trade name: Calcining-type Roller Hearth Kiln), and main-calcined under conditions of a set temperature of a heater calcining unit of 740°C and a retention time of 5 hours, thereby obtaining a calcined product 1.

The calcined product 1 and pure water having a liquid temperature of 5°C were mixed at a ratio of 50% by mass of the calcined product 1 with respect to the total amount to produce a slurry. The slurry was stirred for 20 minutes for washing, and then dewatered. The resultant was further subjected to a heat treatment at 210°C for 10 hours in a nitrogen atmosphere to dry moisture remaining after the dewatering.

Thereafter, the resultant was crushed using a masscolloider (manufactured by MASUKO SANGYO CO.,LTD., trade name: Supermasscolloider) under conditions of a gap of 100 µm and a rotation speed of 1,200 rpm. The resultant was further crushed using a pin mill (manufactured by Hosokawa Micron Group, trade name: Coroplex 160z) under conditions of a supply rate of 8 kg/hr and a rotation speed of 8,500 rpm to obtain LiMO(1).

In the compositional formula (I) of the LiMO(1), x = -0.006, y = 0.125, z = 0, and M1 was Co and Al.

Table 1 shows the pore volume (cm³/g) of the pores X, A/D₅₀, A/D₁₀, A/D₉₀, the pore volume (cm³/g) of the pores Y, the BET specific surface area (m²/g), the average pore size A (nm), the tap density (g/cm³), and D₅₀ (µm) of the LiMO(1). The same applies to the following examples and comparative examples.

Table 1 shows the initial viscosity and the viscosity ratio of a positive electrode mixture using the LiMO(1). The same applies to the following examples and comparative examples.

### (Example 2)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a cobalt sulfate aqueous solution, and an aluminum sulfate aqueous solution at a ratio at which a mole ratio of Ni, Co, and Al was 0.88:0.09:0.03.

Next, while stirring the reaction vessel at 800 rpm, the mixed raw material solution and an ammonium sulfate aqueous solution were continuously added to the reaction vessel at a rate at which a NH₃ concentration in the reaction vessel was 10 g/L. While stirring at 800 rpm, a sodium hydroxide aqueous solution was added dropwise thereto as appropriate such that a pH in the reaction vessel was 11.6 (measurement temperature: 40°C), thereby obtaining a reaction precipitate 2.

The reaction precipitate 2 was washed, dewatered, dried, and sieved to obtain a metal composite hydroxide 2 containing Ni, Co, and Al. The tap density of the metal composite hydroxide 2 was 1.73 g/cm³.

The metal composite hydroxide 2 was calcined in an atmospheric air at 650°C for 5 hours, and cooled to room temperature to obtain MCC(2) as a metal composite oxide.

A predetermined amount of lithium hydroxide was weighed such that the amount (mole ratio) of Li with respect to the total amount 1 of Ni, Co, and Al contained in the MCC(2) was 1.02. The MCC(2) and the lithium hydroxide were mixed with each other to obtain a mixture 2.

The mixture 2 was put into a furnace tube of a rotary kiln (manufactured by NORITAKE CO., LIMITED, product name: Desk Top Rotary Kiln), and preliminarily calcined under conditions of a powder flow velocity of 33 m/hour, a set temperature of a heater calcining part of the furnace tube of 680°C, and a retention time of 0.8 hours to obtain a reactant 2 of the MCC(2) and the lithium hydroxide.

The obtained reactant 2 was put into a furnace of a roller hearth kiln (manufactured by NORITAKE CO., LIMITED, trade name: Calcining-type Roller Hearth Kiln), and main-calcined at a set temperature of a heater calcining unit of 740°C and a retention time of 5 hours, thereby obtaining a calcined product 2.

The calcined product 2 and pure water having a liquid temperature of 5°C were mixed at a ratio of 40% by mass of the calcined product 2 with respect to the total amount to produce a slurry. The slurry was stirred for 20 minutes for washing, and then dewatered. The resultant was further subjected to a heat treatment at 250°C for 10 hours in a nitrogen atmosphere to dry moisture remaining after the dewatering.

Thereafter, the resultant was crushed using a masscolloider (manufactured by MASUKO SANGYO CO.,LTD., trade name: Supermasscolloider) under conditions of a gap of 100 µm and a rotation speed of 1,200 rpm, thereby obtaining LiMO(2).

In the compositional formula (I) of the LiMO(2), x = -0.001, y = 0.130, z = 0, and M1 was Co and Al.

### (Example 3)

A predetermined amount of lithium hydroxide was weighed such that the amount (mole ratio) of Li with respect to the total amount 1 of Ni, Co, and Al contained in the MCC(2) produced in Example 2 was 1.10. The MCC(2) and the lithium hydroxide were mixed with each other to obtain a mixture 3.

The mixture 3 was put into a furnace tube of a rotary kiln (manufactured by NORITAKE CO., LIMITED, product name: Desk Top Rotary Kiln), and preliminarily calcined under conditions of a powder flow velocity of 33 m/hour, a set temperature of a heater calcining part of the furnace tube of 680°C, and a retention time of 2 hours to obtain a reactant 3 of the metal composite oxide 3 and the lithium hydroxide.

The LiMO(3) was obtained by carrying out the same operation as in Example 2, except that the reactant 3 was used instead of the reactant 2.

In the compositional formula (I) of the LiMO(3), x = 0.009, y = 0.112, z = 0, and M1 was Co and Al.

### (Example 4)

A predetermined amount of lithium hydroxide was weighed such that the amount (mole ratio) of Li with respect to the total amount 1 of Ni, Co, and Al contained in the MCC(2) produced in Example 2 was 1.10. The MCC(2) and the lithium hydroxide were mixed with each other to obtain a mixture 4.

The LiMO(4) was obtained by carrying out the same operation as in Example 2, except that the mixture 4 was used instead of the mixture 2.

In the compositional formula (I) of the LiMO(4), x = 0.020, y = 0.102, z = 0, and M1 was Co and Al.

### (Comparative Example 1)

After water was poured into a reaction vessel equipped with a stirrer and an overflow pipe, a sodium hydroxide aqueous solution was added thereto, and the liquid temperature was retained at 50°C.

A mixed raw material solution was prepared by mixing a nickel sulfate aqueous solution, a cobalt sulfate aqueous solution, and an aluminum sulfate aqueous solution at a ratio at which a mole ratio of Ni, Co, and Al was 0.88:0.09:0.03.

Next, while stirring the reaction vessel at 800 rpm, the mixed raw material solution and an ammonium sulfate aqueous solution were continuously added to the reaction vessel at a rate at which a NH₃ concentration in the reaction vessel was 8 g/L. While stirring at 800 rpm, a sodium hydroxide aqueous solution was added dropwise thereto as appropriate such that a pH in the reaction vessel was 11.6 (measurement temperature: 40°C), thereby obtaining a reaction precipitate 11.

The reaction precipitate 11 was washed, dewatered, dried, and sieved to obtain a metal composite hydroxide 11 containing Ni, Co, and Al. The tap density of the metal composite hydroxide 11 was 1.72 g/cm³.

The metal composite hydroxide 11 was calcined in an atmospheric air at 650°C for 5 hours, and cooled to room temperature to obtain MCC(11) as a metal composite oxide.

A predetermined amount of lithium hydroxide was weighed such that the amount (mole ratio) of Li with respect to the total amount 1 of Ni, Co, and Al contained in the MCC(11) was 1.10. The MCC(11) and the lithium hydroxide were mixed with each other to obtain a mixture 11.

The mixture 11 was put into a furnace tube of a rotary kiln (manufactured by NORITAKE CO., LIMITED, product name: Desk Top Rotary Kiln), and preliminarily calcined under conditions of a powder flow velocity of 14.5 m/hour, a set temperature of a heater calcining part of the furnace tube of 680°C, and a retention time of 7.8 hours to obtain a reactant 11 of the MCC(11) and the lithium hydroxide.

The LiMO(11) was obtained by carrying out the same operation as in Example 2, except that the reactant 11 was used instead of the reactant 2.

In the compositional formula (I) of the LiMO(11), x = -0.014, y = 0.132, z = 0, and M1 was Co and A1.

### (Comparative Example 2)

After water was poured into a reaction vessel equipped with a stirrer and an overflow pipe, a sodium hydroxide aqueous solution was added thereto, and the liquid temperature was retained at 50°C.

A mixed raw material solution was prepared by mixing a nickel sulfate aqueous solution, a cobalt sulfate aqueous solution, and an aluminum sulfate aqueous solution at a ratio at which a mole ratio of Ni, Co, and Mn was 0.55:0.21:0.24.

Next, while stirring the reaction vessel at 750 rpm, the mixed raw material solution and an ammonium sulfate aqueous solution were continuously added to the reaction vessel at a rate at which a NH₃ concentration in the reaction vessel was 3 g/L. While stirring at 750 rpm, a sodium hydroxide aqueous solution was added dropwise thereto as appropriate such that a pH in the reaction vessel was 11.3 (measurement temperature: 40°C), thereby obtaining a reaction precipitate 12.

The reaction precipitate 12 was washed, dewatered, dried, and sieved to obtain MCC(12) as a metal composite hydroxide containing Ni, Co, and Mn. The tap density of the MCC(12) was 1.38 g/cm³.

A predetermined amount of lithium hydroxide was weighed such that the amount (mole ratio) of Li with respect to the total amount 1 of Ni, Co, and Mn contained in the MCC12 was 1.05. The MCC(12) and the lithium hydroxide were mixed with each other to obtain a mixture 12.

The mixture 12 was put into a furnace of a roller hearth kiln (manufactured by NORITAKE CO., LIMITED, trade name: Calcining-type Roller Hearth Kiln), and main-calcined under conditions of a set temperature of a heater calcining unit of 650°C and a retention time of 5 hours, thereby obtaining a reactant 12 of the MCC(12) and lithium hydroxide.

The obtained reactant 12 was put into a furnace of a roller hearth kiln (manufactured by NORITAKE CO., LIMITED, trade name: Calcining-type Roller Hearth Kiln), and main-calcined at a set temperature of a heater calcining unit of 970°C and a retention time of 5 hours, thereby obtaining a calcined product 12.

Thereafter, the resultant was crushed using a masscolloider (manufactured by MASUKO SANGYO CO.,LTD., trade name: Supermasscolloider) under conditions of a gap of 100 µm and a rotation speed of 1,200 rpm.

The resultant was further crushed using a pin mill (manufactured by Hosokawa Micron Group, trade name: Coroplex 160z) under conditions of a supply rate of 8 kg/hr and a rotation speed of 16,000 rpm to obtain LiMO(12).

In the compositional formula (I) of the LiMO(12), x = 0.043, y = 0.422, z = 0, and M1 was Co and Mn.

**[Table 1]**

| | Pore volume of pores X | A/D₅₀ | A/D₁₀ | A/D₉₀ | Pore volume of pores Y | BET specific surface area | Average pore size A | Tap density | D₅₀ | Initial viscosity | Viscosity ratio |
|---|---|---|---|---|---|---|---|---|---|---|---|
| | ×10⁻³ cm³/g | ×10⁻³ | ×10⁻³ | ×10⁻³ | ×10⁻³ cm³/g | m²/g | nm | g/cm³ | µm | Pa·s | |
| Example 1 | 0.9 | 1.79 | 2.89 | 1.08 | 8.0 | 1.39 | 23.1 | 2.73 | 12.9 | 330 | 33.8 |
| Example 2 | 0.7 | 1.24 | 2.12 | 0.80 | 5.2 | 1.07 | 19.2 | 2.86 | 14.8 | 334 | 35.5 |
| Example 3 | 0.6 | 1.45 | 2.37 | 0.89 | 5.2 | 0.80 | 20.8 | 2.86 | 14.3 | 395 | 32.1 |
| Example 4 | 0.5 | 1.41 | 2.29 | 0.82 | 3.7 | 0.71 | 20.9 | 2.85 | 14.9 | 335 | 36.7 |
| Comparative Example 1 | 1.1 | 0.85 | 1.27 | 0.56 | 3.9 | 1.44 | 10.9 | 2.86 | 12.8 | 357 | 46.0 |
| Comparative Example 2 | 0.4 | 3.54 | 6.58 | 1.96 | 2.3 | 0.70 | 14.7 | 1.86 | 4.2 | 535 | 27.2 |

In Examples 1 to 4, a metal composite hydroxide having a tap density of 1.40 to 2.0 g/cm³ was used, and the preliminarily calcining was carried out using a rotary kiln under the condition that the powder flow velocity was 33 m/hour. Furthermore, the obtained calcined product was crushed under appropriate conditions using the masscolloider and the pin mill.

Such LiMO satisfied (1) and (2) described above. Furthermore, the initial viscosity of the positive electrode mixture using the LiMO(1) to LiMO(4) was low, and the viscosity ratio thereof was 40 or less.

On the other hand, in Comparative Example 1 in which the preliminarily calcining was carried out using a rotary kiln under the condition that the powder flow velocity was 14.5 m/hour, the (1) and (2) were not satisfied. This is considered to be because the mixture did not flow during the preliminary calcining, the secondary particles were in contact with each other for a long time, sintering between the secondary particles proceeded, a large number of the pores X were formed, and pores having a large pore size were crushed, so that A was reduced. As a result, it is considered that the viscosity ratio of the positive electrode mixture was more than 40.

In Comparative Example 2 in which the metal composite hydroxide having a tap density of less than 1.40 g/cm³ was used and the preliminarily calcining and the main calcining were carried out using a roller hearth kiln, (1) and (2) were not satisfied. This is considered to be because the mixture did not flow during the preliminary calcining and the main calcining, frequency of wear due to the contact between the secondary particles was reduced, the formation of the pores X did not proceed, and pores having a pore size larger than the particle diameter remained. As a result, it is considered that the initial viscosity of the positive electrode mixture was increased.

### INDUSTRIAL APPLICABILITY

According to the present invention, it is possible to provide LiMO, CAM, a positive electrode for lithium secondary battery, and a lithium secondary battery, in which a positive electrode mixture having a low initial viscosity and being unlikely to change from the initial viscosity even in a case of continuous coating is obtained.

### REFERENCE SIGNS LIST

1: Separator
2: Positive electrode
2a: Positive electrode active material layer
2b: Positive electrode current collector
3: Anode
4: Electrode group
5: Battery can
6: Electrolytic solution
7: Top insulator
8: Sealing body
10: Lithium secondary battery
21: Positive electrode lead
31: Anode lead
100: Laminate
110: Positive electrode
111: Positive electrode active material layer
112: Positive electrode current collector
113: External terminal
120: Anode
121: Anode active material layer
122: Anode current collector
123: External terminal
130: Solid electrolyte layer
200: Exterior body
200a: Opening portion
1000: All-solid-state lithium secondary battery

## Claims

1. A lithium metal composite oxide comprising:
at least Li and Ni,
wherein the following (1) and the following (2) are satisfied,
(1) in a pore size distribution of an adsorption isotherm which is obtained by measuring an adsorption isotherm and a desorption isotherm with a nitrogen gas according to a Barrett-Joyner-Halenda method, a pore volume in a range where a pore size is 2 nm or more and 10 nm or less is more than 0.4 × 10⁻³ cm³/g and 1.0 × 10⁻³ cm³/g or less,
(2) A/D₅₀ is 0.9 × 10⁻³ or more and 3.4 × 10⁻³ or less,
(A is an average pore size (nm) based on a pore size distribution of a desorption isotherm obtained by measuring an adsorption isotherm and a desorption isotherm with a nitrogen gas according to a Barrett-Joyner-Halenda method, and D₅₀ is a value (µm) of a particle diameter at 50% cumulative from a fine particle side in a cumulative particle size distribution curve obtained by a particle size distribution measurement of the lithium metal composite oxide).

2. The lithium metal composite oxide according to Claim 1,
wherein the following (3) is satisfied,
(3) A/D₁₀ is 6.5 × 10⁻³ or less,
(D₁₀ is a value (µm) of a particle diameter at 10% cumulative from the fine particle side in the cumulative particle size distribution curve).

3. The lithium metal composite oxide according to Claim 1 or 2,
wherein the following (4) is satisfied,
(4) A/D₉₀ is 1.9 × 10⁻³ or less,
(D₉₀ is a value (µm) of a particle diameter at 90% cumulative from the fine particle side in the cumulative particle size distribution curve).

4. The lithium metal composite oxide according to Claim 1 or 2,
wherein the following (5) is satisfied,
(5) in the pore size distribution of the adsorption isotherm, a pore volume in a range where a pore size is more than 10 nm and 200 nm or less is 8.0 × 10⁻³ cm³/g or less.

5. The lithium metal composite oxide according to Claim 1 or 2,
wherein a BET specific surface area is 0.5 m²/g or more and 1.5 m²/g or less.

6. The lithium metal composite oxide according to Claim 1 or 2,
wherein the A is 10 nm or more and 40 nm or less.

7. The lithium metal composite oxide according to Claim 1 or 2,
wherein a tap density is 2.5 g/cm³ or more and 3.1 g/cm³ or less.

8. The lithium metal composite oxide according to Claim 1 or 2,
wherein the D₅₀ is 5 µm or more and 20 µm or less.

9. The lithium metal composite oxide according to Claim 1 or 2,
wherein the lithium metal composite oxide is represented by the following compositional formula (I),
Li[Liₓ(Ni_{(1-y-z)}M1_{y}M2_{z})₁₋ₓ]O₂ ... (I)
(in the compositional formula (I), M1 is one or more elements selected from the group consisting of Co, Mn, and Al, M2 is one or more elements selected from the group consisting of Fe, Cu, Ti, Mg, W, Mo, Nb, Zn, Sn, Zr, Ga, B, Si, S, and P, and the compositional formula (I) satisfies -0.1 ≤ x ≤ 0.2, 0 < y ≤ 0.7, and 0 ≤ z ≤ 0.2).

10. The lithium metal composite oxide according to Claim 9,
wherein the compositional formula (I) satisfies 0 < y + z ≤ 0.3.

11. A positive electrode active material for lithium secondary battery, comprising:
the lithium metal composite oxide according to Claim 1 or 2.

12. A positive electrode for lithium secondary battery, comprising:
the positive electrode active material for lithium secondary battery according to Claim 11.

13. A lithium secondary battery comprising:
the positive electrode for lithium secondary battery according to Claim 12.
